# FASCICULE DE BREVET EUROPEEN

(11) **EP 3 842 666 B1**
(45) Date de publication et mention de la délivrance du brevet: **28.01.2026**
(21) Numéro de dépôt: 20212872.4
(22) Date de dépôt: 09.12.2020
(51) Int. Cl.: F16H 57/04

(54) **GROUPE MOTOPROPULSEUR ÉLECTRIQUE À DEUX EMBRAYAGES**
ELEKTRISCHER ANTRIEB MIT ZWEI KUPPLUNGEN
ELECTRIC POWERTRAIN WITH TWO CLUTCHES

(30) Priorité: 26.12.2019 FR 1915632
(43) Date de publication de la demande: 30.06.2021
(73) Titulaire: VALEO EMBRAYAGES, 80009 Amiens (FR)
(72) Inventeur: DOREMUS, Olivier, 95892 CERGY PONTOISE (FR); GUINOT, Thierry, 95892 CERGY PONTOISE (FR)
(74) Mandataire: Valeo Powertrain Systems

(56) Documents cités:
- EP-A2- 3 109 513
- WO-A1-2016/120472
- DE-T5- 112011 105 075
- US-A1- 2017 122 413
- US-B1- 9 657 826
- US-B1- 9 719 584

## Description

### DOMAINE TECHNIQUE DE L'INVENTION

L'invention se rapporte à un groupe motopropulseur électrique pour un véhicule électrique ou hybride, notamment pour un véhicule automobile électrique ou hybride.

### ETAT DE LA TECHNIQUE ANTERIEURE

L'invention s'applique plus particulièrement aux véhicules hybrides et aux véhicules électriques. Les vitesses d'un moteur électrique peuvent être élevées, supérieures ou égales à 15000 tours par minutes par exemple, notamment pour des chaînes de transmission électriques à deux rapports.

Pour adapter la vitesse et le couple, l'utilisation de moteurs électriques nécessite généralement une transmission comportant un dispositif de réduction de vitesse permettant d'atteindre les niveaux de vitesse et de couple de sortie souhaités à chaque roue, et un différentiel pour faire varier la vitesse entre deux roues latéralement opposées.

Pour s'adapter aux différents régimes du véhicule, il est connu d'utiliser des embrayages qui permettent de sélectionner le rapport de réduction souhaité au niveau du dispositif de réduction de vitesse. Ce type de dispositif est par exemple divulgué dans le document DE102016202723 qui divulgue un système de transmission mettant en œuvre des trains d'engrenages planétaires relativement complexes. Le document WO 2016 120472 A1 divulgue un ensemble de transmission comprenant une machine électrique et un embrayage.

Il a été proposé dans la demande FR1901916, non publiée à ce jour, un dispositif de transmission de couple pour un véhicule comprenant au moins un moteur, le dispositif de transmission de couple comprenant :
- un premier embrayage comprenant un premier élément d'entrée apte à être entraînée par le moteur et un premier élément de sortie, un couple étant transmis entre le premier élément d'entrée et le premier élément de sortie lorsque le premier embrayage est fermé,
- un deuxième embrayage comprenant un deuxième élément d'entrée apte à être entraînée par le moteur et un deuxième élément de sortie, un couple étant transmis entre le deuxième élément d'entrée et le deuxième élément de sortie lorsque le deuxième embrayage est fermé,
- un organe de transmission,
- un premier mécanisme de transmission agencé pour transmettre un couple entre le premier élément de sortie et l'organe de transmission, selon un premier rapport de vitesses,
- un deuxième mécanisme de transmission agencé pour transmettre un couple entre le deuxième élément de sortie et l'organe de transmission, selon un deuxième rapport de vitesses différent du premier rapport de vitesse, et
- un élément de connexion agencé pour autoriser ou interrompre l'entraînement mutuel en rotation entre le premier élément de sortie du premier embrayage et l'organe de transmission, par l'intermédiaire du premier mécanisme de transmission.

L'utilisation d'au moins deux rapports de vitesses permet de concilier couple de démarrage élevé et vitesse maximale et par conséquent de réduire le temps nécessaire au véhicule pour atteindre une vitesse élevée. Le choix de deux rapports de vitesse avec un moteur électrique offre un bon compromis entre complexité de la transmission, performances dynamiques, consommation du véhicule, et taille du moteur électrique.

L'utilisation des embrayages, notamment des embrayages multidisques progressifs, permet également de garantir le confort de l'utilisateur en évitant les changements de rapports brusques ainsi que les variations perceptibles d'accélération.

De plus, l'élément de connexion permet d'interrompre l'entraînement de l'élément de sortie du premier embrayage, et notamment les disques de friction de sortie du premier embrayage, lorsque le deuxième embrayage est fermé, ce qui permet d'améliorer le rendement énergétique en limitant significativement, voire en supprimant le couple de traînées au niveau du premier embrayage lorsque le deuxième embrayage est fermé.

Mais la mise en œuvre de deux embrayages implique la mise en œuvre de nombreuses pièces différentes, ce qui complique la conception et le montage d'un groupe motopropulseur et augmente le cout.

### EXPOSE DE L'INVENTION

L'invention vise à remédier aux inconvénients de l'état de la technique.

Pour ce faire est proposé, selon un premier aspect de l'invention, un ensemble de transmission comprenant :
- une machine électrique dotée d'un rotor apte à tourner autour d'un axe de rotation (X),
- un carter de la machine électrique, enveloppant la machine électrique,
- un premier embrayage destiné à entrainer en rotation un premier mécanisme de transmission,
Selon l'invention, le carter de la machine électrique comprend une première portion tubulaire s'étendant le long de l'axe de rotation (X) et autour de l'axe de rotation (X), la première portion tubulaire du carter faisant saillie axialement vers l'extérieur du carter sur un premier côté de la machine électrique, le premier embrayage étant disposé au moins en partie autour de la première portion tubulaire.
Selon l'invention, le premier embrayage comporte une pluralité de disques de friction, au moins une partie des disques de friction étant disposée autour de la première portion tubulaire.

Ainsi le carter de la machine électrique peut contribuer à l'actionnement et/ou au montage du premier embrayage.

L'ensemble de transmission peut comporter aussi une ou plusieurs des caractéristiques suivantes :

L'ensemble de transmission comprend un organe de sortie apte à être entrainé par le rotor soit par l'intermédiaire du premier mécanisme de transmission, soit par l'intermédiaire du deuxième mécanisme de transmission, le premier embrayage étant apte, dans un état fermé, à transmettre un couple respectivement entre le rotor et le premier mécanisme de transmission.

La transmission du couple entre le rotor et le premier mécanisme de transmission étant interrompue lorsque ledit premier embrayage est ouvert ; le deuxième embrayage étant apte, dans un état fermé, à transmettre un couple respectivement entre le rotor et le deuxième mécanisme de transmission, la transmission du couple entre le rotor et le deuxième mécanisme de transmission étant interrompue lorsque ledit deuxième embrayage est ouvert,

Le premier embrayage est un embrayage humide et la première portion tubulaire comprend au moins un conduit de distribution de fluide de refroidissement, ledit au moins un conduit de distribution s'étendant axialement et débouchant radialement à l'intérieur des disques de friction du premier embrayage.

Ledit au moins un conduit de distribution débouche axialement dans un secteur axial occupé par les disques de friction du premier embrayage.

L'ensemble de transmission comprend un deuxième embrayage destiné à entrainer en rotation un deuxième mécanisme de transmission , et le carter de la machine électrique comprend une deuxième portion tubulaire s'étendant le long de l'axe de rotation (X), la deuxième portion tubulaire faisant saillie axialement vers l'extérieur du carter sur un deuxième côté de la machine électrique opposé axialement au premier côté, le deuxième embrayage étant disposé au moins en partie autour de la deuxième portion tubulaire.

Le deuxième embrayage comporte une pluralité de disques de friction, au moins une partie des disques de friction étant disposée autour de la deuxième portion tubulaire.

Le deuxième embrayage est un embrayage humide et la deuxième portion tubulaire comprend au moins un conduit de distribution de fluide de refroidissement, ledit au moins un conduit de distribution s'étendant axialement et débouchant radialement à l'intérieur des disques de friction du deuxième embrayage.

Ledit au moins un conduit de distribution débouche axialement dans un secteur axial occupé par les disques de friction du deuxième embrayage.

Le rotor est monté solidaire en rotation d'un arbre d'entrée commun, commun au premier et au deuxième embrayages, un premier palier à roulement étant intercalé radialement entre le carter de la machine électrique et l'arbre d'entrée commun , le premier palier à roulements étant situé par rapport au rotor du côté du premier embrayage , et un deuxième palier à roulement étant intercalé radialement entre le carter de la machine électrique et l'arbre d'entrée commun , le deuxième palier à roulements étant situé par rapport au rotor du côté du deuxième embrayage, le conduit de distribution de la première portion tubulaire débouchant axialement au regard du premier palier à roulement et/ou le conduit de distribution de la deuxième portion tubulaire débouchant axialement au regard du deuxième palier à roulement.

Le carter de la machine électrique comprend une première paroi latérale disposée axialement entre le rotor et le premier embrayage et/ou le carter de la machine électrique comprend une deuxième paroi latérale disposée axialement entre le rotor et le deuxième embrayage.

La première paroi latérale comprend au moins un conduit d'alimentation en fluide qui s'étend radialement et qui communique avec le dit au moins un conduit de distribution de fluide de refroidissement de la première portion tubulaire et/ou la deuxième paroi latérale comprend au moins un conduit d'alimentation en fluide qui s'étend radialement et qui communique avec le dit au moins un conduit de distribution de fluide de refroidissement de la deuxième portion tubulaire.

Le premier embrayage est actionné par un premier actionneur qui comprend une première chambre destinée à contenir un fluide d'actionnement et un premier piston mobile apte à coulisser axialement dans la première chambre , la première chambre étant formée dans le carter de la machine électrique, et ledit au moins un conduit d'alimentation en fluide de la première paroi latérale communiquant avec la première chambre ; et/ou le deuxième embrayage est actionné par un deuxième actionneur qui comprend une deuxième chambre destinée à contenir un fluide d'actionnement et un deuxième piston mobile apte à coulisser axialement dans la deuxième chambre , la deuxième chambre étant formée dans le carter de la machine électrique, et ledit au moins un conduit d'alimentation en fluide de la deuxième paroi latérale communiquant avec la deuxième chambre.

La première chambre est agencée radialement à l'extérieur dudit au moins un conduit de distribution de fluide de refroidissement de la première portion tubulaire.

La deuxième chambre est agencée radialement à l'extérieur dudit au moins un conduit de distribution de fluide de refroidissement de la deuxième portion tubulaire.

L'arbre d'entrée commun est creux et le deuxième mécanisme de transmission comprend un arbre de liaison s'étendant axialement et disposé à l'intérieur de l'arbre d'entrée commun, des éléments de roulement, tels que des aiguilles, étant interposés entre l'arbre d'entrée commun et l'arbre de liaison , l'arbre d'entrée commun comportant au moins un conduit de lubrification communiquant avec le dit au moins un conduit d'alimentation de la première paroi latérale et/ou de la deuxième paroi latérale.

Ledit au moins un conduit de lubrification est débouchant de manière à lubrifier les éléments de roulement. Ainsi les éléments de roulements intercalés entre les arbres peuvent être lubrifiés.

Le premier mécanisme de transmission comprend un premier dispositif de réduction et le deuxième mécanisme de transmission comprend un deuxième dispositif de réduction relié au deuxième embrayage par l'arbre de liaison, les premier et deuxième dispositifs de réduction étant situés axialement du même côté de la machine électrique.

Le carter de la machine électrique comprend un boitier et l'une parmi la première et la deuxième paroi latérale est formée sur un couvercle rapporté sur le boitier.

Le boitier comprend une portion cylindrique dans laquelle est logée la machine électrique.

Le couvercle est rapporté sur la portion cylindrique du boitier.

Le couvercle est monté de façon étanche sur le boitier, notamment sur sa portion cylindrique.

L'autre parmi la première et la deuxième paroi latérale est formée d'une seule pièce avec la portion cylindrique du boitier et forme un fond du boitier.

Un palier à roulements est monté sur la première portion tubulaire et un premier élément de reprise d'effort est agencé en appui axial contre ce palier à roulement de manière à reprendre au moins une partie des efforts axiaux transmis par le premier actionneur au premier embrayage.

La première portion tubulaire est formée dans une pièce du carter de la machine électrique comprenant une paroi couvrant et/ou protégeant la machine électrique.

Autrement dit, cette paroi et la portion tubulaire sont formées d'un seul tenant. Autrement dit, cette pièce de carter contribue à envelopper et/ou protéger directement la machine électrique, la machine électrique (notamment son rotor ou son stator) étant disposée en vis-à-vis de la paroi couvrant et/ou protégeant la machine électrique.

La première portion tubulaire et la première paroi latérale sont formées d'une seule pièce, en particulier dans le couvercle.

La deuxième portion tubulaire et la deuxième paroi latérale sont formées d'une seule pièce.

Selon un mode de réalisation un groupe motopropulseur comprends un ensemble tel que décrit précédemment.

L'organe de sortie n'est entrainé que par la machine électrique. Autrement dit, le groupe motopropulseur ne comprend pas de moteur thermique ou à combustion.

Selon un autre mode de réalisation un essieu électrique comprends un groupe motopropulseur tel que décrit précédemment.

### BREVE DESCRIPTION DES FIGURES

D'autres caractéristiques et avantages de l'invention ressortiront à la lecture de la description qui suit, en référence aux figures annexées, qui illustrent :
[Fig. 1] la figure 1, un schéma de principe montrant le contexte d'utilisation de l'ensemble de transmission de la figure 3.
[Fig. 2] la figure 2, une vue schématique en perspective d'une variante de l'ensemble de transmission de la figure 1
[Fig. 3] la figure 3, une vue en coupe d'un mode de réalisation de l'invention.
Pour plus de clarté, les éléments identiques ou similaires sont repérés par des signes de référence identiques sur l'ensemble des figures.

### DESCRIPTION DÉTAILLÉE DE MODES DE REALISATION

Dans la description et les revendications, on utilisera les termes "externe" et "interne" ainsi que les orientations "axiale" et "radiale" pour désigner, selon les définitions données dans la description, des éléments du groupe motopropulseur. Par convention, l'orientation "radiale" est dirigée orthogonalement à l'orientation axiale. L'orientation axiale se rapporte, suivant le contexte, à l'un des axes de rotation des éléments du groupe motopropulseur, par exemple à l'axe de rotation du rotor. L'orientation "circonférentielle" est dirigée orthogonalement à la direction axiale et orthogonalement à la direction radiale. Les termes "externe" et "interne" sont utilisés pour définir la position relative d'un élément par rapport à un autre, par rapport à l'axe de référence, un élément proche de l'axe est ainsi qualifié d'interne par opposition à un élément externe situé radialement en périphérie.

En pratique, les différents organes du groupe motopropulseur disposent d'une entrée de couple ainsi que d'une sortie de couple. L'entrée est située, d'un point de vue cinématique, du côté de la machine électrique et la sortie est située du côté des roues du véhicule.

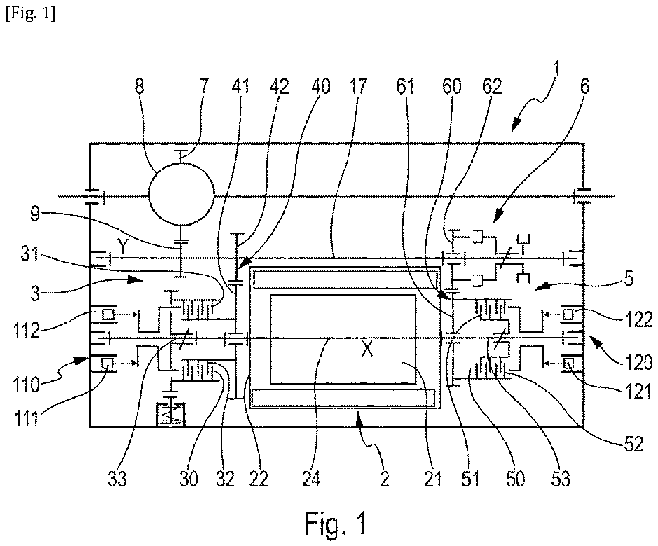

Sur la figure 1 est schématisé un groupe motopropulseur 1.

Il s'agit d'un groupe motopropulseur 1 de véhicule automobile comprenant :
- une machine électrique 2 comportant un rotor 21 tournant autour d'un axe de rotation X,
- un premier ensemble de transmission 3 comprenant un premier embrayage 30 associé à un premier mécanisme de transmission 40,
- un deuxième ensemble de transmission 5 comprenant un deuxième embrayage 50 associé à un deuxième mécanisme de transmission 60,
- un organe de sortie 17 apte à être entrainé par le rotor 21 soit par l'intermédiaire du premier mécanisme de transmission, soit par l'intermédiaire du deuxième mécanisme de transmission.

Le groupe motopropulseur 1 comprend en outre un différentiel 8 apte à entraîner deux roues latéralement opposées, ou deux trains de roues avant et arrière motorisés du véhicule.

Un étage de réduction 7, 9 est agencé entre l'organe de sortie 17 et le différentiel 8 de façon à réduire la vitesse de rotation entre l'organe de sortie 17 et le différentiel 8, et de façon plus globale entre la machine électrique 2 et le différentiel 8.

Le premier embrayage 30 est apte, dans un état fermé, à transmettre un couple respectivement entre le rotor 21 et le premier mécanisme de transmission 40, mais la transmission du couple entre le rotor 21 et le premier mécanisme de transmission 40 est interrompue lorsque le premier embrayage 30 est ouvert.

Le deuxième embrayage 50 est apte lui aussi, dans un état fermé, à transmettre un couple respectivement entre le rotor 21 et le deuxième mécanisme de transmission 60, mais la transmission du couple entre le rotor 21 et le deuxième mécanisme de transmission 60 est interrompue lorsque le deuxième embrayage 50 est ouvert.

Le premier mécanisme de transmission 40 et le deuxième mécanisme de transmission 60 présentent des rapports de vitesse différents. L'actionnement du premier et/ou du deuxième embrayage permet de sélectionner le rapport de vitesse adéquat. La première vitesse, utile aux phases de démarrage/décollage du véhicule est ici obtenue grâce au deuxième mécanisme de transmission 60 et la deuxième vitesse est obtenue grâce au premier mécanisme de transmission40.

Le premier embrayage 30 et le deuxième embrayage 50 sont disposés axialement de part et d'autre du rotor 21. Ainsi, on peut utiliser des structures d'embrayages proches voire identiques, ce qui permet de standardiser les éléments de conception des premier et deuxième embrayages et de réduire le nombre de références de pièces dans le groupe motopropulseur. De plus, il est possible de disposer les deux embrayages 30, 50 proches de leur axe de rotation X.

Chaque embrayage 30, 50 comporte au moins une première interface de transmission 31, 51 et une deuxième interface de transmission 32, 52 coopérant l'une avec l'autre pour transmettre un couple lorsque l'embrayage 30, 50 est fermé.

En revanche, la transmission du couple entre la première interface de transmission 31, 51 et la deuxième interface de transmission 32, 52 de chaque embrayage 30, 50 est interrompue lorsque l'embrayage 30, 50 est ouvert.

Le rotor 21, les premières interfaces de transmission 31, 51, et les deuxièmes interfaces de transmission 32, 52 sont disposées de sorte qu'il existe un axe parallèle à l'axe X qui passe à la fois par le rotor 21 et par les premières 31, 51 et deuxièmes 32, 52 interfaces de transmission. Ainsi, le rotor et les embrayages peuvent être placés approximativement à une même distance de l'axe de rotation X.

Le rotor 21 présente un diamètre radialement externe supérieur au diamètre radialement externe des première et deuxième interfaces de transmission 31, 32, 51, 52 des premier et deuxième embrayages 30, 50. L'encombrement radial de la machine électrique et des deux embrayages est donc compact.

Le groupe motopropulseur 1 comporte un carter 22 enveloppant la machine électrique 2 et les premier et deuxième embrayages 30, 50 sont disposés à l'extérieur du carter 22 de la machine électrique 2. Les embrayages 30 et 50 sont placés cinématiquement au plus près de la machine électrique 2, en amont des réducteurs, ce qui signifie que les deux embrayages sont placés dans une portion la chaîne de transmission où le couple est le plus faible. Dans le cas d'embrayages progressifs par friction notamment, cette disposition permet une meilleure compacité des embrayages. De préférence, le premier embrayage 30 est un embrayage progressif par friction et le deuxième embrayage 50 est un embrayage progressif par friction. Ainsi les changements de vitesses peuvent être lisses et progressifs sans accélérations brusques. On entend par embrayage progressif, un embrayage dont le couple transmissible est contrôlable de façon progressive.

Le premier embrayage 30 et le deuxième embrayage 50 sont des embrayages multidisques humides.

Le premier embrayage 30 et le deuxième embrayage 50 comportent chacun des disques de friction 31E, 31S, 51E, 52S. Les premières interfaces de friction 31, 51 sont formées par des disques de friction d'entrée 31E, 51E et les deuxièmes interfaces 32, 52 de friction sont formées par des disques de friction de sortie 31S, 51S. Les disques de friction d'entrée et de sortie de chaque embrayage 30, 50 peuvent être pressés axialement les uns contre les autres pour transmettre un couple.

Le premier ensemble de transmission 3 comprend un premier tronçon d'arbre d'entrée 33 solidaire en rotation du rotor 21 et s'étendant axialement du rotor 21 au premier embrayage 30.

Ce premier tronçon d'arbre d'entrée 33 entraine en rotation la première interface de transmission 31 du premier embrayage 30.

En pratique, le premier tronçon d'arbre d'entrée 33 est accouplé de façon solidaire en rotation à un premier porte disque d'entrée 35 sur lequel peuvent être montés, de façon coulissante axialement et solidaire en rotation autour de l'axe X, les disques de friction d'entrée 31E du premier embrayage 30.

Le deuxième ensemble de transmission 5 comprend un deuxième tronçon d'arbre d'entrée 53 solidaire en rotation du rotor 21 et s'étendant axialement du rotor 21 au deuxième embrayage 50.

Ce deuxième tronçon d'arbre d'entrée 53 entraine en rotation la première interface de transmission 51 du deuxième embrayage 50.

En pratique, le deuxième tronçon d'arbre d'entrée 53 est accouplé de façon solidaire en rotation à un deuxième porte disque d'entrée 55 sur lequel peuvent être montés, de façon coulissante axialement et solidaire en rotation autour de l'axe X, les disques de friction d'entrée 51E du deuxième embrayage 50.

Ici, le premier tronçon d'arbre d'entrée 33 et le deuxième tronçon d'arbre d'entrée 53 sont formés sur un arbre d'entrée commun 24 solidaire en rotation du rotor 21. L'arbre d 'entrée commun 24 s'étend le long de l'axe de rotation X, radialement à l'intérieur du rotor 21, en débordant axialement de part et d'autre du rotor 21.

Les disques de friction de sortie 32S du premier embrayage 30 sont montés solidaires en rotation, et de façon coulissante axialement, d'un premier porte disques de sortie 37 du premier embrayage 30.

De même, les disques de friction de sortie 52S du deuxième embrayage 50 sont également montés solidaires en rotation, et de façon coulissante axialement, d'un deuxième porte disques de sortie 57 du deuxième embrayage 50.

Le premier mécanisme de transmission 40 comprend un premier train d'engrenages et le deuxième mécanisme de transmission 60 comprend un deuxième train d'engrenages.

Le premier train d'engrenage comprend une première roue menante 41 apte à être entrainé en rotation par la deuxième interface de transmission 32 du premier embrayage 30, lorsque le premier embrayage 30 est fermé. La première roue menante 41 est montée folle sur le premier tronçon d'arbre d'entrée 33.

En pratique le premier porte disque de sortie 37 du premier embrayage 30 peut être directement fixé sur la première roue menante 41.

Le deuxième train d'engrenage comprend une deuxième roue menante 61 entrainée en rotation par la deuxième interface de transmission 52 du deuxième embrayage 50, lorsque le deuxième embrayage 50 est fermé. La deuxième roue menante 61 est montée folle sur le deuxième tronçon d'arbre d'entrée 53.

En pratique le deuxième porte disque de sortie 57 du deuxième embrayage 50 peut être directement fixé sur la deuxième roue menante 61.

La première roue menante 41 et la deuxième roue menante 61 sont agencées axialement de part et d'autre du rotor 21.

L'organe de sortie 17 est un arbre 17 disposé de façon être entrainé le long d'un axe Y parallèle à l'axe de rotation X.

Les premiers et deuxième trains d'engrenages des premier et deuxième mécanismes de transmission 40, 60 sont agencés en cascade, entre l'axe X et l'axe Y.

L'arbre 17 porte d'une part une première roue menée 42 du premier train d'engrenages 40 entrainée directement par le première roue menante 41, et d'autre part une deuxième roue menée 62 du deuxième train d'engrenages 60 entrainée directement par la deuxième roue menante 61.

L'entrainement roue menante /roue menée peut se faire aussi indirectement, c'est-à-dire via un organe denté intermédiaire.

Le groupe motopropulseur 1 comprend aussi un dispositif de déconnexion 6 associé ici au deuxième mécanisme de transmission 60 de sorte que l'entrainement de la deuxième interface de transmission 52 du deuxième embrayage 50 est interrompu lorsqu'un couple est transmis du rotor 21 à l'organe de sortie 17 par l'intermédiaire du premier mécanisme de transmission 40.

Autrement dit, le dispositif de déconnexion 6 est agencé pour autoriser l'entraînement mutuel en rotation entre la deuxième interface de transmission 52 du deuxième embrayage 50 et l'arbre 17, par l'intermédiaire du deuxième mécanisme de transmission 60, lorsque le deuxième embrayage 50 est fermé, et pour interrompre l'entraînement mutuel en rotation entre la deuxième interface de transmission 52 du deuxième embrayage 50 et l'arbre 17,par l'intermédiaire du deuxième mécanisme de transmission 60, lorsque le deuxième embrayage 50 est ouvert et le premier embrayage 30 fermé.

En évitant d'entraîner le deuxième mécanisme de transmission 60 de façon inutile, on évite d'avoir des pertes de rendements préjudiciables au niveau du deuxième mécanisme de transmission 60, pertes qui pourraient être liées en particulier au barbotage des éléments de transmission tournants. On évite aussi de faire tourner inutilement les disques de friction de sortie 52S du deuxième embrayage 50.

Le dispositif de déconnection 6 est un dispositif connu par l'homme du métier qui peut intégrer par exemple un crabot et/ou un synchronisateur. Son actionnement peut être fait de façon hydraulique.

Lorsque le premier rapport de vitesses est engagé, le deuxième embrayage 50, normalement ouvert, est maintenu fermé par l'application d'une commande de fermeture, alors que le premier embrayage 30, normalement ouvert, est maintenu ouvert et que le dispositif de déconnexion 6, normalement ouvert, est maintenu fermé. L'arbre 17 est entraîné par l'intermédiaire du deuxième mécanisme de transmission 60. L'arbre 17 transmet alors le couple au différentiel 8 via un troisième train d'engrenages 7, 9 qui réduit la vitesse de rotation.

Lorsque le deuxième rapport de vitesses est engagé, le premier embrayage 30, normalement ouvert, est maintenu fermé par l'application d'une commande de fermeture, alors que le deuxième embrayage, normalement ouvert, est maintenu ouvert et que le dispositif de déconnexion 6, normalement ouvert, est maintenu ouvert. L'arbre 17 est entraîné par l'intermédiaire du premier mécanisme de transmission 40. L'arbre 17 transmet encore le couple au différentiel 8 via un troisième train d'engrenages 7, 9.

Le passage du premier rapport de vitesse au deuxième rapport de vitesse est obtenu en cessant d'alimenter en énergie la commande de fermeture du deuxième embrayage 50, en appliquant une commande de fermeture au premier embrayage 30 et en interrompant l'actionnement du dispositif de déconnexion. Le deuxième embrayage 50 et le dispositif de déconnexion 6 retournent alors d'eux-mêmes dans leur position stable, à savoir la position ouverte, et le premier embrayage 30 passe dans sa position fermée.

L'ensemble est alors peu consommateur d'énergie, puisque la deuxième roue dentée de sortie 62, montée folle sur l'arbre 17, n'est pas entraînée par celui-ci et n'entraîne pas inutilement la première roue menante 41 et les disques de friction de sortie 52S du deuxième embrayage 50.

Selon une variante, le deuxième embrayage 50 est normalement ouvert et le premier embrayage est normalement fermé. Le système de transmission de couple est alors encore mieux optimisé dans le deuxième rapport, puisqu'aucune des commandes n'est alimentée en énergie dans ce mode de fonctionnement le plus usuel.

En pratique, on peut prévoir un interverrouillage hydraulique ou par l'intermédiaire d'une commande électronique, entre le deuxième embrayage 50 et le dispositif de déconnexion 6, pour coordonner les ouvertures et fermetures des deux composants.

Suivant une variante, on peut prévoir aussi d'équiper la première roue menée 42 du premier mécanisme de transmission 40 d'un dispositif de déconnexion similaire au dispositif de déconnexion 6.

En variante, certains au moins des trains d'engrenage peuvent être remplacés par des transmissions à courroie. Pour une démultiplication plus importante, certains au moins des trains d'engrenages peuvent inclure une roue intermédiaire entre roue menante et roue menée.

Le groupe motopropulseur comprend un premier actionneur 110 comprenant une première chambre 112 destinée à contenir un fluide d'actionnement et un premier piston mobile 111 apte à coulisser axialement dans la première chambre 112. La première chambre 112 est formée dans un carter du groupe motopropulseur 1.

Le groupe motopropulseur comprend un deuxième actionneur 120 comprenant une deuxième chambre 122 destinée à contenir un fluide d'actionnement et un deuxième piston mobile 121 apte à coulisser axialement dans la deuxième chambre 122. La deuxième chambre 122 est formée elle aussi dans le carter du groupe motopropulseur 1.

L'effort d'actionnement des premier et deuxième embrayages 30 et 50 est dirigé axialement vers la machine électrique.

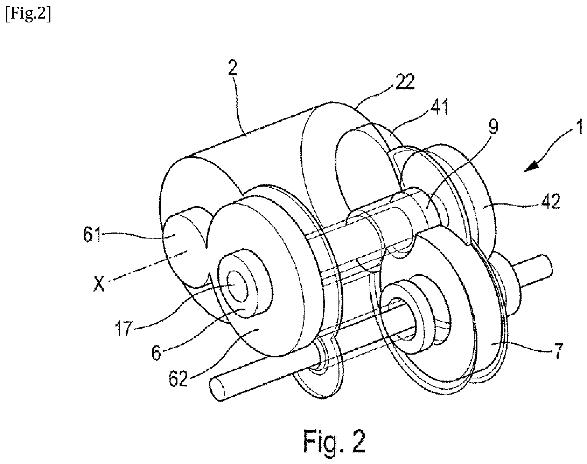

Sur la figure 2, est représentée schématiquement une variante du groupe motopropulseur de la figure 1. Dans cette variante, les roues menantes 41 et 61 ont respectivement un diamètre plus petit que les roues menées 42 et 62 de manière à réduire la vitesse de rotation de l'arbre 17 par rapport à l'arbre d'entrée commun 24.

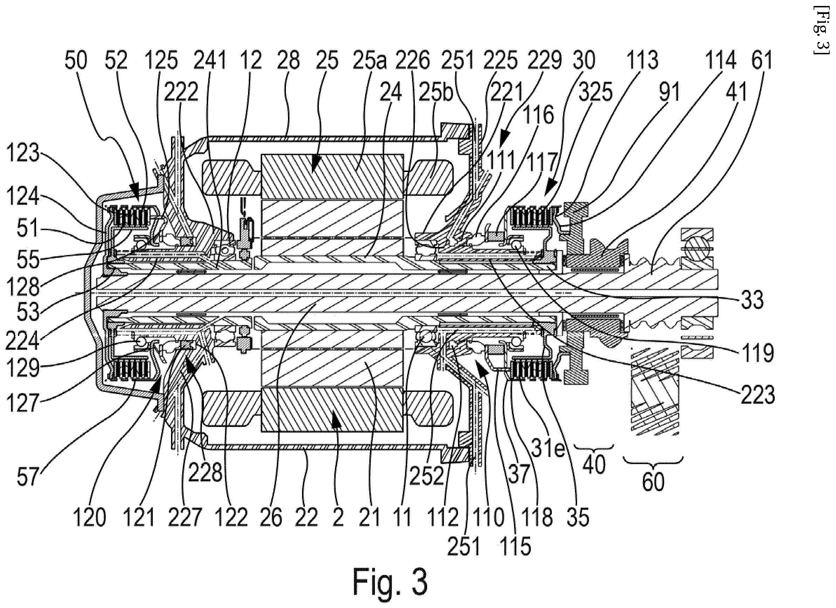

Sur la figure 3 est représenté un mode de réalisation de l'invention.

Les trains d'engrenages du premier mécanisme de transmission 40 et du deuxième mécanisme de transmission 60 sont agencés axialement du même côté du rotor 21. La première roue menante 41 est un premier pignon d'entrée et la deuxième roue menante 61 est un deuxième pignon d'entrée. Le premier pignon d'entrée 41 et deuxième pignon d'entrée 61 sont agencés axialement du même côté du rotor. Le premier embrayage 30 est ici disposé axialement entre d'une part le rotor 21 et d'autre part les premier et deuxième pignons d'entrée 41 et 61.

Ainsi le groupe motopropulseur est plus compact et il est possible d'agencer l'arbre de sortie 17 axialement d'un seul côté du rotor, ce qui permet d'avoir plus de libertés pour configurer l'architecture du groupe motopropulseur 1.

Les trains d'engrenages du premier mécanisme de transmission 40 et du deuxième mécanisme de transmission 60 peuvent être intégrés au sein réducteur modulaire disposé axialement d'un seul côté du rotor 21, ce module pouvant intégrer aussi le premier embrayage 30.

La machine électrique 2 est logée dans un carter 22. La machine électrique 2 est agencée autour d'un axe X et comprend le rotor 21 et un stator 25. On entend ici par « stator » l'organe comprenant le corps de stator 25a et le bobinage 25b.

L'arbre 24 fait entrer le couple dans les ensembles de transmission 3 et 5. Il est appelé pour cette raison arbre d'entrée commun. L'arbre d'entrée commun 24 est entrainé en rotation par le rotor 21 autour de l'axe X. Le rotor 21 et l'arbre 24 peuvent par exemple être fixés l'un à l'autre par emmanchement à force.

Le corps de stator 25a est de forme tubulaire et s'étend le long de l'axe X. Le bobinage 25b s'étend axialement le long du corps de stator 25a. Le bobinage 25b dépasse axialement de chaque côté du corps de stator 25a, en direction des embrayages 30 et 50. Le bobinage 25b comprend des têtes de bobinages qui sont formées dans la partie du bobinage 25b dépassant axialement du corps de stator 25a.

Le premier tronçon d'arbre d'entrée 33 et le deuxième tronçon d'arbre d'entrée 53 sont disposés axialement de part et d'autre du rotor 21. De chaque côté du rotor 21, le carter 22 de la machine électrique 2 comprend respectivement une première portion en saillie 221 vers l'intérieur du carter et une deuxième portion en saillie 222 vers l'intérieur du carter 22. La première portion en saillie 221 comprend un premier alésage à l'intérieur duquel est monté un premier palier à roulement 11 guidant en rotation autour de l'axe de rotation X le premier tronçon d'arbre d'entrée 33. La deuxième portion en saillie 222 comprend un deuxième alésage à l'intérieur duquel est monté un deuxième palier à roulement 12 guidant en rotation autour de l'axe de rotation X le deuxième tronçon d'arbre d'entrée 53.

En outre, de chaque côté du rotor 21, le carter 22 de la machine électrique 2 comprend respectivement une première portion tubulaire 223 faisant saillie vers l'extérieur du carter 22 et une deuxième portion tubulaire 224 faisant également saillie vers l'extérieur du carter 22.

Le premier tronçon d'arbre d'entrée 33 et le deuxième tronçon d'arbre d'entrée 53 sont formés dans un arbre d'entrée commun 24 qui est creux.

Le premier tronçon d'arbre d'entrée 33 est monté solidaire en rotation d'un premier porte disque d'entrée 35 du premier embrayage 30. Les disques de friction d'entrée 31E du premier embrayage sont montés, sur le premier porte disque d'entrée 35, de façon solidaire en rotation autour de l'axe X et mobiles axialement. Les disques de friction d'entrée forment la première interface de transmission 31 du premier embrayage 30.

Un premier porte disque de sortie 37 est monté solidaire en rotation du premier pignon d'entrée 41 du premier mécanisme de transmission 40. Ici, une roue dentée 91 d'un dispositif de verrouillage, appelé aussi « park lock » en anglais, est soudée au premier porte disque de sortie 37 et couplée rigidement en rotation au premier pignon d'entrée 41. Autrement dit, le premier pignon d'entrée 41 est monté solidaire en rotation au premier porte disque de sortie 37 par l'intermédiaire de la roue dentée 91 un dispositif de verrouillage. La roue dentée 91 du dispositif de verrouillage est ainsi associée avantageusement au train d'engrenage associé au deuxième rapport de vitesse.

Le groupe motopropulseur 1 comprend un premier actionneur 110 doté d'un premier élément mobile 111 apte à fermer le premier embrayage 30 pour transmettre un couple entre la première interface de transmission 31 et la deuxième interface de transmission 32 du premier embrayage 30, c'est-à-dire entre les disques de friction d'entrée 31e et les disques de friction de sortie 32s du premier embrayage 30. Le premier actionneur 110 est disposé axialement entre le rotor 21 et le premier embrayage 30.

Le premier élément mobile 111 du premier actionneur 110 transmet aux disques de friction 31e, 32s du premier embrayage 30 un mouvement de translation axiale de sorte que les disques de friction 31e, 32s du premier embrayage soient pressés axialement les uns contre les autres contre un premier élément de réaction 113 du premier embrayage 30. Le premier élément de réaction 113 est formé ici sur une coupelle 114 agencée de manière à transmettre un couple entre le premier porte disque de sortie 37 et la roue dentée 91 du dispositif de verrouillage.

Une première liaison cinématique 116 rotative autour de l'axe de rotation X et un premier poussoir 115 sont intercalés entre le premier élément mobile 111 du premier actionneur 110 et les disques de friction 31e, 32s du premier embrayage 30 pour transférer les efforts axiaux du premier élément mobile 111 aux disques de friction 31e, 32s du premier embrayage 30. Les disques de friction 31e, 32s du premier embrayage 30 sont alors pressés axialement les uns contre les autres entre d'une part le premier poussoir 115 et d'autre part la coupelle 114.

La première liaison cinématique rotative116 est intercalée entre le premier élément mobile 111 et le premier poussoir 115 de sorte que le premier élément mobile 111 soit fixe en rotation par rapport au carter 22 de la machine électrique 2 et que le premier poussoir 115 soit apte à tourner avec les disques de friction 31e, 32s du premier embrayage 30 lorsque le premier embrayage 30 est fermé.

Le premier actionneur 110 comprend une première chambre 112 destinée à contenir un fluide d'actionnement et le premier élément mobile 111 est formé par un premier piston mobile 111 apte à coulisser axialement dans la première chambre 112.

Un premier groupe de ressorts 117 est disposé axialement entre le premier porte disque de sortie 37 du premier embrayage 30 et le premier poussoir 115 de manière à autoriser un retour du premier poussoir 115 dans une position de repos lorsque la pression de fluide dans la première chambre 112 est inférieure à un premier seuil prédéterminé.

Un palier à roulements 119 est monté sur la première portion tubulaire 223 et un premier élément de reprise d'effort 118 est agencé en appui axial contre ce palier à roulement 119 de manière à reprendre au moins une partie des efforts transmis du premier poussoir 115 aux disques de friction 31e, 32s du premier embrayage 30. Le premier groupe de ressorts 117 prend également appui contre le premier élément de reprise d'effort 118 du côté du premier élément de reprise d'effort 118 tourné vers la machine électrique 2, alors que sur son côté opposé à la machine électrique 2, le premier élément de reprise d'effort 118 est en appui axial directement ou indirectement contre le palier à roulements 119.

Le premier élément de reprise d'efforts 118 est ici formé sur la portion radialement interne du premier porte-disques de sortie 37.

De l'autre côté de la machine électrique 2, le deuxième tronçon d'arbre d'entrée 53 est monté solidaire en rotation d'un deuxième porte disque d'entrée 55 du deuxième embrayage 50. Les disques de friction d'entrée 51E du deuxième embrayage 50 sont montés, sur le deuxième porte disque d'entrée 50, de façon solidaire en rotation autour de l'axe X et mobiles axialement. Les disques de friction d'entrée 51E forment la première interface de transmission 51 du deuxième embrayage 50.

Un deuxième porte disque de sortie 57 est monté solidaire en rotation du deuxième pignon d'entrée 61 du deuxième mécanisme de transmission 60.

Le deuxième mécanisme de transmission 60 comprend un arbre de liaison 26 qui s'étend axialement. Cet arbre de liaison est disposé radialement à l'intérieur du rotor 21, et radialement à l'intérieur de l'arbre d'entrée commun 24 de sorte qu'une première partie de l'arbre de liaison 26 est disposée à l'intérieur du premier tronçon d'arbre d'entrée 33 et une deuxième partie de l'arbre de liaison 26 est disposée à l'intérieur du deuxième tronçon d'arbre d'entrée 53. Des éléments de guidage en rotation et/ou des roulements tels que des aiguilles peuvent être insérés entre l'arbre d'entrée commun 24 et l'arbre de liaison 26 de manière à favoriser le guidage en rotation des deux arbres.

L'arbre de liaison 26 est ainsi configuré pour transmettre un couple entre la deuxième interface de transmission 52 du deuxième embrayage 50 et le deuxième pignon d'entrée 61 du deuxième mécanisme de transmission 60.

Autrement dit, le deuxième pignon d'entrée 61 est monté solidaire en rotation du deuxième porte disque de sortie 57 par l'intermédiaire de l'arbre de liaison 26.

Le groupe motopropulseur 1 comprend un deuxième actionneur 120 doté d'un deuxième élément mobile 121 apte à fermer le deuxième embrayage 50 pour transmettre un couple entre la première interface de transmission 51 et la deuxième interface de transmission 52 du deuxième embrayage 50, c'est-à-dire entre les disques de friction d'entrée 51e et les disques de friction de sortie 52s du deuxième embrayage 50. Le deuxième actionneur 120 est disposé axialement entre le rotor 21 et le deuxième embrayage 50.

Le deuxième élément mobile 121 du deuxième actionneur 120 transmet aux disques de friction 51e, 52s du deuxième embrayage 50 un mouvement de translation axiale de sorte que les disques de friction 51e, 52s du deuxième embrayage soient pressés axialement les uns contre les autres contre un deuxième élément de réaction 123 du deuxième embrayage 50. Le deuxième élément de réaction 123 est formé ici sur un flasque 124 agencée de manière à transmettre un couple entre le deuxième porte disque de sortie 57 et l'arbre de liaison 26.

Une deuxième liaison cinématique 126 rotative autour de l'axe de rotation X et un deuxième poussoir 125 sont intercalés entre le deuxième élément mobile 121 du deuxième actionneur 120 et les disques de friction 51e, 52s du deuxième embrayage 50 pour transférer les efforts axiaux du deuxième élément mobile 121 aux disques de friction 51e, 52s du deuxième embrayage 50. Les disques de friction 51e, 52s du deuxième embrayage 50 sont alors pressés axialement les uns contre les autres entre d'une part le deuxième poussoir 125 et d'autre part le flasque 124.

La deuxième liaison cinématique rotative 26 est intercalée entre le deuxième élément mobile 121 et le deuxième poussoir 125 de sorte que le deuxième élément mobile 121 soit fixe en rotation par rapport au carter 22 de la machine électrique et que le deuxième poussoir 125 soit apte à tourner avec les disques de friction 51e, 52s du deuxième embrayage 50 lorsque le deuxième embrayage 50 est fermé.

Le deuxième actionneur 120 comprend une deuxième chambre 122 destinée à contenir un fluide d'actionnement et le deuxième élément mobile 121 est formé par un deuxième piston mobile 121 apte à coulisser axialement dans la deuxième chambre 122.

Une rondelle élastique 127 est disposée axialement entre le deuxième porte disque de sortie 57 du deuxième embrayage 50 et le deuxième poussoir 125 de manière à autoriser un retour du deuxième poussoir 125 dans une position de repos lorsque la pression de fluide dans la deuxième chambre 122 est inférieure à un deuxième seuil prédéterminé. De façon alternative, un deuxième groupe de ressorts hélicoïdaux s'étendant axialement peuvent être prévues autour de l'axe de rotation X pour remplacer cette rondelle élastique.

Un palier à roulements 129 est monté sur la deuxième portion tubulaire 224 et un deuxième élément de reprise d'effort 128 est agencé en appui axial contre ce palier à roulement 129 de manière à reprendre au moins une partie des efforts transmis du deuxième poussoir 125 aux disques de friction 51e, 52s du deuxième embrayage 50. La rondelle élastique 127 prend également appui contre le deuxième élément de reprise d'effort 128 du côté du deuxième élément de réaction tourné vers la machine électrique 2, alors que sur son côté opposé à la machine électrique 2, le deuxième élément de reprise d'effort 128 est en appui axial contre le palier à roulements 129.

Le deuxième élément de reprise d'efforts 128 est ici formé sur la portion radialement interne du deuxième porte-disques de sortie 57.

Pour diminuer le coût de fabrication d'un tel groupe motopropulseur, les premier et deuxième embrayages 30, 50 peuvent comporter des éléments similaires, c'est-à-dire standardisés pour les deux embrayages 30 et 50. Par exemple, le premier piston mobile 111 et le deuxième piston mobile 121 sont identiques. Ici, les disques de friction d'entrée 31E du premier embrayage 30 sont également identiques aux disques d'entrée 51E du deuxième embrayage 50. Les disques de friction de sortie 32s du premier embrayage 30 sont également identiques aux disques de sortie 52s du deuxième embrayage 50. Les poussoirs 115 et 125, les portes disques d'entrée 35, 55 et de sortie 37, 57 peuvent également être identiques.

Les efforts d'actionnement des premier 30 et deuxième 50 embrayages sont dirigés axialement dans la direction opposée à la machine électrique 2.

La première portion tubulaire 223 s'étend le long de l'axe de rotation X et fait saillie axialement d'un premier côté de la machine électrique 2. Le premier embrayage 33 est disposé en partie autour de la première portion tubulaire 223. Notamment, la plupart des disques de friction 31E, 32S du premier embrayage 30 sont disposés autour de la première portion tubulaire 223. Le premier porte disque d'entrée 35 et le premier porte disques de sortie 37 sont également agencés en partie autour de la première portion tubulaire 223 du carter 22.

La première portion tubulaire 223 comprend plusieurs conduits de distribution 252 en fluide de refroidissement s'étendant axialement et débouchant, radialement à l'intérieur des disques de friction 31E, 32s, et axialement dans un secteur axial occupé par les disques de friction.

Le carter 22 de la machine électrique 2 comprend une première paroi latérale 225, agencée sur un premier côté de la machine électrique 2. La première paroi latérale 225 est disposée axialement entre le rotor 21 et le premier embrayage 30. La première portion tubulaire 223 s'étend axialement depuis cette première paroi latérale 225.

La première paroi latérale 225 comprend plusieurs conduits d'alimentation en fluide 251. Ces conduits d'alimentation 251 s'étendent radialement et communiquent avec les conduits de distribution de fluide de refroidissement 252 de la première portion tubulaire 223. La première paroi latérale 225 s'étend globalement radialement vers l'extérieur depuis la première portion tubulaire 223.

Les conduits d'alimentation en fluide 251, la première chambre 112 et/ou la deuxième chambre 122 peuvent être disposés au moins en partie radialement à l'intérieur des têtes de bobinages, avec recouvrement.

La première chambre 112 est formée dans le carter 22 de la machine électrique 2, plus précisément dans la première paroi latérale 225. La première paroi latérale 225 comprend une base radialement interne 226 depuis laquelle s'étend axialement, du côté du premier embrayage 30 la première portion tubulaire 223. La première portion en saille 221 dotée de l'alésage de montage du premier palier à roulements 11 s'étend de l'autre côté de la base radialement interne 226 de la première paroi 225.

La première chambre 112 est ménagée dans la base radialement interne 226 de la première paroi 225. La base radialement interne 226 de la première paroi 226 présente pour ce faire une épaisseur plus grande par rapport au reste de la première paroi 225. La première chambre 112 est disposée radialement à l'extérieur des conduits de distribution 252. La première chambre 112 communique elle aussi avec les conduits d'alimentation en fluide 251.

Les conduits de distribution 252 de fluide de refroidissement débouchent également dans la première portion en saillie 221 radialement à l'intérieur de l'alésage de montage du premier palier à roulements 11. Les conduits de distribution 252 de la première portion tubulaire 223 débouchent axialement au regard du premier palier à roulement 11 de manière à permettre une lubrification de ce dernier.

La deuxième portion tubulaire 224 s'étend le long de l'axe de rotation X et fait saillie axialement d'un deuxième côté opposé au premier côté de la machine électrique 2. Le deuxième embrayage 50 est disposé en partie autour de la deuxième portion tubulaire 224. Notamment, la plupart des disques de friction 51E, 52S du deuxième embrayage 50 sont disposés autour de la première portion tubulaire 224. Le deuxième porte disque d'entrée 55 et le deuxième porte disques de sortie 57 sont également agencés en partie autour de la deuxième portion tubulaire 224 du carter 22.

La deuxième portion tubulaire 224 comprend plusieurs conduits de distribution 252 en fluide de refroidissement s'étendant axialement et débouchant, radialement à l'intérieur des disques de friction 51E, 52s, et axialement dans un secteur axial occupé par les disques de friction 51E, 52s.

De l'huile peut circuler dans le réseau formé par les conduits d'alimentation 251 et de distribution 252.

Le carter 22 de la machine électrique 2 comprend une deuxième paroi latérale 227, agencée sur un deuxième côté de la machine électrique 2. La deuxième paroi latérale 227 est disposée axialement entre le rotor 21 et le deuxième embrayage 50. La deuxième portion tubulaire 224 s'étend axialement depuis cette deuxième paroi latérale 227.

La deuxième paroi latérale 227 comprend plusieurs conduits d'alimentation en fluide 251. Ces conduits d'alimentation 251 s'étendent radialement et communiquent avec les conduits de distribution 252 de fluide de refroidissement de la deuxième portion tubulaire 224. La deuxième paroi latérale 227 s'étend globalement radialement vers l'extérieur depuis la deuxième portion tubulaire 224.

La deuxième chambre 122 est elle aussi formée dans le carter 22 de la machine électrique 2, plus précisément dans la deuxième paroi latérale 227. La deuxième paroi latérale 227 comprend une base radialement interne 228 depuis laquelle s'étend axialement, du côté du deuxième embrayage 50, la deuxième portion tubulaire 224. La deuxième portion en saille 222 dotée de l'alésage de montage du deuxième palier à roulements 12 s'étend de l'autre côté de la base radialement interne 228 de la deuxième paroi latérale 227.

La deuxième chambre 122 est ménagée dans la base radialement interne 228 de la deuxième paroi 227. La base radialement interne 228 de la deuxième paroi 227 présente pour ce faire une épaisseur plus grande par rapport au reste de la deuxième paroi 227. La deuxième chambre 122 est disposée radialement à l'extérieur des conduits de distribution 252 de la deuxième portion tubulaire 224. La deuxième chambre 122 communique elle aussi avec les conduits d'alimentation en fluide 251 de la deuxième paroi latérale 227.

Les conduits de distribution 252 de fluide de refroidissement de la deuxième portion tubulaire 224 débouchent également dans la deuxième portion en saillie 222 radialement à l'intérieur de l'alésage de montage du deuxième palier à roulements 12. Les conduits de distribution 252 de la deuxième portion tubulaire 224 débouchent axialement au regard du deuxième palier à roulement 12 de manière à permettre une lubrification de ce dernier.

Des aiguilles sont interposées entre l'arbre d'entrée commun 24 aux deux embrayages 30,50 et l'arbre de liaison 26. L'arbre d'entrée commun 24 comporte plusieurs conduits de lubrification 241 débouchant radialement vers l'intérieur et vers l'extérieur. Ces conduits de lubrification 241 communiquent avec l'un des conduits d'alimentation 251 de la première paroi latérale 225 et de la deuxième paroi latérale 227. Ainsi les aiguilles intercalées entre les arbres peuvent être lubrifiées.

Le carter 22 de la machine électrique 2 comprend un boitier 28. La première paroi latérale 225 est formée sur un couvercle 229 rapporté sur ce boitier 28. Le boitier 28 comprend une portion cylindrique dans laquelle est logée la machine électrique 2. Le couvercle 229 est rapporté de façon étanche sur cette portion cylindrique. La première portion tubulaire 223 et la première paroi latérale 225 sont formées d'une seule pièce dans le couvercle 229.

La deuxième paroi latérale 227 est formée d'une seule pièce avec la portion cylindrique du boitier et forme un fond du boitier 28. De même, la deuxième portion tubulaire 224 et la deuxième paroi latérale 227 sont formées d'une seule pièce dans le boitier 28.

Les trains d'engrenages des mécanismes de transmission 40, 60 qui ne sont pas entièrement représentées sur la figure 2 peuvent avoir les mêmes caractéristiques que ceux de la figure 1. Ils peuvent entrainer un différentiel de véhicule comme expliqué pour la solution de la figure 1.

## Revendications

1. Ensemble de transmission comprenant :
- une machine électrique (2) dotée d'un rotor (21) apte à tourner autour d'un axe de rotation (X),
- un carter (22) de la machine électrique , enveloppant la machine électrique (2),
- un premier embrayage (30) destiné à entrainer en rotation un premier mécanisme de transmission (40),
dans lequel le carter (22) de la machine électrique (2) comprend une première portion tubulaire (223) s'étendant le long de l'axe de rotation (X) et autour de l'axe de rotation (X), la première portion tubulaire (223) du carter (22) faisant saillie axialement vers l'extérieur du carter sur un premier côté de la machine électrique, le premier embrayage (33) étant disposé au moins en partie autour de la première portion tubulaire (223),
**caractérisé en ce que**
le premier embrayage (30) comporte une pluralité de disques de friction (31E, 32s), au moins une partie des disques de friction (31E, 32s) étant disposée autour de la première portion tubulaire (223).

2. Ensemble de transmission selon la revendication précédente dans lequel le premier embrayage (30) est un embrayage humide et la première portion tubulaire (223) comprend au moins un conduit de distribution (252) de fluide de refroidissement, ledit au moins un conduit de distribution (252) s'étendant axialement et débouchant radialement à l'intérieur des disques de friction (31E, 32s) du premier embrayage.

3. Ensemble de transmission selon la revendication précédente dans lequel ledit au moins un conduit de distribution (252) débouche axialement dans un secteur axial occupé par les disques de friction (31E, 32s) du premier embrayage (30).

4. Ensemble de transmission selon l'une des revendications précédentes dans lequel l'ensemble de transmission comprend un deuxième embrayage (50) destiné à entrainer en rotation un deuxième mécanisme de transmission (60), et le carter (22) de la machine électrique (2) comprend une deuxième portion tubulaire (224) s'étendant le long de l'axe de rotation (X), la deuxième portion tubulaire (224) faisant saillie axialement vers l'extérieur du carter (22) sur un deuxième côté de la machine électrique (2) opposé axialement au premier côté, le deuxième embrayage (50) étant disposé au moins en partie autour de la deuxième portion tubulaire (224).

5. Ensemble de transmission selon la revendication précédente dans lequel le deuxième embrayage (30) comporte une pluralité de disques de friction (51E, 52s), au moins une partie des disques de friction étant disposée autour de la deuxième portion tubulaire (224) ; le deuxième embrayage (50) étant un embrayage humide et la deuxième portion tubulaire comprend au moins un conduit de distribution de fluide de refroidissement, ledit au moins un conduit de distribution (252) s'étendant axialement et débouchant radialement à l'intérieur des disques de friction (31E, 32s) du deuxième embrayage (50), et ledit au moins un conduit de distribution (252) débouchant axialement dans un secteur axial occupé par les disques de friction (51E, 52s) du deuxième embrayage (50).

6. Ensemble de transmission selon la revendication précédente dans lequel le rotor (21) est monté solidaire en rotation d'un arbre d'entrée commun (24), commun au premier et au deuxième embrayages (30, 50), un premier palier à roulement (11) étant intercalé radialement entre le carter (22) de la machine électrique et l'arbre d'entrée commun (24), le premier palier à roulements (11) étant situé par rapport au rotor (21) du côté du premier embrayage (30), et un deuxième palier à roulement étant intercalé radialement entre le carter (22) de la machine électrique et l'arbre d'entrée commun (24), le deuxième palier à roulements (12) étant situé par rapport au rotor (21) du côté du deuxième embrayage (50), le conduit de distribution (252) de la première portion tubulaire (223) débouchant axialement au regard du premier palier à roulement (11) et/ou le conduit de distribution de la deuxième portion tubulaire (224) débouchant axialement au regard du deuxième palier à roulement (12).

7. Ensemble de transmission selon l'une des revendications précédentes dans lequel le carter (22) de la machine électrique (2) comprend une première paroi latérale (225) disposée axialement entre le rotor (21) et le premier embrayage (30) et le carter (22) de la machine électrique (2) comprend une deuxième paroi latérale (227) disposée axialement entre le rotor (21) et le deuxième embrayage (50) ; et dans lequel la première paroi latérale (225) comprend au moins un conduit d'alimentation en fluide (251) qui s'étend radialement et qui communique avec le dit au moins un conduit de distribution de fluide de refroidissement (252) de la première portion tubulaire (223) et/ou la deuxième paroi latérale (227) comprend au moins un conduit d'alimentation en fluide (251) qui s'étend radialement et qui communique avec le dit au moins un conduit de distribution de fluide de refroidissement (252) de la deuxième portion tubulaire (224).

8. Ensemble de transmission selon la revendication précédente dans lequel le premier embrayage (30) est actionné par un premier actionneur (110) qui comprend une première chambre (112) destinée à contenir un fluide d'actionnement et un premier piston mobile (111) apte à coulisser axialement dans la première chambre (112), la première chambre (112) étant formée dans le carter (22) de la machine électrique (2), et ledit au moins un conduit d'alimentation en fluide (251) de la première paroi latérale (225) communiquant avec la première chambre ; et/ou le deuxième embrayage (50) est actionné par un deuxième actionneur (120) qui comprend une deuxième chambre (122) destinée à contenir un fluide d'actionnement et un deuxième piston mobile (121) apte à coulisser axialement dans la deuxième chambre (122), la deuxième chambre (122) étant formée dans le carter (22) de la machine électrique (2), et ledit au moins un conduit d'alimentation en fluide (251) de la deuxième paroi latérale (227) communiquant avec la deuxième chambre (122).

9. Ensemble de transmission selon les revendications 5 et 7 dans lequel l'arbre d'entrée commun (24) est creux et le deuxième mécanisme de transmission (60) comprend un arbre de liaison (26) s'étendant axialement à l'intérieur de l'arbre d'entrée commun (24), des éléments de roulement, tels que des aiguilles, étant interposés entre l'arbre d'entrée commun (24) et l'arbre de liaison (26), l'arbre d'entrée commun (24) comportant au moins un conduit de lubrification (241) communiquant avec le dit au moins un conduit d'alimentation (251) de la première paroi latérale (225) et/ou de la deuxième paroi latérale (227), ledit au moins un conduit de lubrification (241) étant débouchant de manière à lubrifier les éléments de roulement.

10. Ensemble de transmission selon l'une des revendications précédentes dans lequel le premier mécanisme de transmission (40) comprend un premier dispositif de réduction et le deuxième mécanisme de transmission (60) comprend un deuxième dispositif de réduction relié au deuxième embrayage (50) par l'arbre de liaison (26), les premier et deuxième dispositifs de réduction étant situés axialement du même côté de la machine électrique (2).

11. Ensemble de transmission selon l'une des revendications 7 ou 8 dans lequel le carter (22) de la machine électrique (2) comprend un boitier (28) et l'une parmi la première et la deuxième paroi latérale (225, 227) est formée sur un couvercle (229) rapporté sur le boitier (28).

12. Ensemble de transmission selon la revendication 7 ou 8 ou 11 dans lequel la première portion tubulaire (223) et la première paroi latérale (225) sont formées d'une seule pièce, en particulier dans le couvercle (229).

## Patentansprüche

1. Getriebeanordnung, umfassend:
eine elektrische Maschine (2) mit einem Rotor (21), der um eine Drehachse (X) drehbar ist,
ein Gehäuse (22) der elektrischen Maschine, das die elektrische Maschine (2) umhüllt,
eine erste Kupplung (30), die dazu bestimmt ist, einen ersten Getriebemechanismus (40) in Drehung zu versetzen,
wobei das Gehäuse (22) der elektrischen Maschine (2) einen ersten rohrförmigen Abschnitt (223) aufweist, der sich entlang der Drehachse (X) und um die Drehachse (X) erstreckt, wobei der erste rohrförmige Abschnitt (223) des Gehäuses (22) axial nach außen von dem Gehäuse auf einer ersten Seite der elektrischen Maschine vorsteht,
die erste Kupplung (33) zumindest teilweise um den ersten rohrförmigen Abschnitt (223) angeordnet ist,
**dadurch gekennzeichnet, dass** die erste Kupplung (30) eine Vielzahl von Reibscheiben (31E, 32s) aufweist, wobei zumindest ein Teil der Reibscheiben (31E, 32s) um den ersten rohrförmigen Abschnitt (223) angeordnet ist.

2. Getriebeanordnung nach dem vorhergehenden Anspruch, bei der die erste Kupplung (30) eine Nasskupplung ist und der erste rohrförmige Abschnitt (223) mindestens eine Kühlmittelverteilerleitung (252) aufweist, wobei die mindestens eine Verteilerleitung (252) sich axial erstreckt und radial innerhalb der Reibscheiben (31E, 32s) der ersten Kupplung mündet.

3. Getriebeanordnung nach dem vorhergehenden Anspruch, bei der die mindestens eine Verteilerleitung (252) axial in einem von den Reibscheiben (31E, 32s) der ersten Kupplung (30) eingenommenen axialen Sektor mündet.

4. Getriebeanordnung nach einem der vorhergehenden Ansprüche, bei der die Getriebeanordnung eine zweite Kupplung (50) umfasst, die dazu bestimmt ist, einen zweiten Getriebemechanismus (60) in Drehung zu versetzen, und das Gehäuse (22) der elektrischen Maschine (2) einen zweiten rohrförmigen Abschnitt (224) umfasst, der sich entlang der Drehachse (X) erstreckt, wobei der zweite rohrförmige Abschnitt (224) axial nach außen von dem Gehäuse (22) auf einer zweiten Seite der elektrischen Maschine (2) vorsteht, die der ersten Seite axial gegenüberliegt, wobei die zweite Kupplung (50) zumindest teilweise um den zweiten rohrförmigen Abschnitt (224) angeordnet ist.

5. Getriebeanordnung nach dem vorhergehenden Anspruch, bei der die zweite Kupplung (30) eine Vielzahl von Reibscheiben (51E, 52s) aufweist, wobei zumindest ein Teil der Reibscheiben um den zweiten rohrförmigen Abschnitt (224) angeordnet ist; die zweite Kupplung (50) eine Nasskupplung ist und der zweite rohrförmige Abschnitt mindestens eine Kühlmittelverteilerleitung aufweist, wobei die mindestens eine Verteilerleitung (252) sich axial erstreckt und radial innerhalb der Reibscheiben (31E, 32s) der zweiten Kupplung (50) mündet, und die mindestens eine Verteilerleitung (252) axial in einem von den Reibscheiben (51E, 52s) der zweiten Kupplung (50) eingenommenen axialen Sektor mündet.

6. Getriebeanordnung nach dem vorhergehenden Anspruch, bei der der Rotor (21) drehfest auf einer gemeinsamen Eingangswelle (24) montiert ist, die der ersten und zweiten Kupplung (30, 50) gemeinsam ist, ein erstes Wälzlager (11) radial zwischen dem Gehäuse (22) der elektrischen Maschine und der gemeinsamen Eingangswelle (24) angeordnet ist, wobei das erste Wälzlager (11) in Bezug auf den Rotor (21) auf der Seite der ersten Kupplung (30) angeordnet ist, und ein zweites Wälzlager radial zwischen dem Gehäuse (22) der elektrischen Maschine und der gemeinsamen Eingangswelle (24) angeordnet ist, wobei das zweite Wälzlager (12) in Bezug auf den Rotor (21) auf der Seite der zweiten Kupplung (50) angeordnet ist, wobei die Verteilerleitung (252) des ersten rohrförmigen Abschnitts (223) axial gegenüber dem ersten Wälzlager (11) mündet und/oder die Verteilerleitung des zweiten rohrförmigen Abschnitts (224) axial gegenüber dem zweiten Wälzlager (12) mündet.

7. Getriebeanordnung nach einem der vorhergehenden Ansprüche, bei der das Gehäuse (22) der elektrischen Maschine (2) eine erste Seitenwand (225) aufweist, die axial zwischen dem Rotor (21) und der ersten Kupplung (30) angeordnet ist, und das Gehäuse (22) der elektrischen Maschine (2) eine zweite Seitenwand (227) aufweist, die axial zwischen dem Rotor (21) und der zweiten Kupplung (50) angeordnet ist; und bei der die erste Seitenwand (225) mindestens eine Fluidzufuhrleitung (251) aufweist, die sich radial erstreckt und mit der mindestens einen Kühlmittelverteilerleitung (252) des ersten rohrförmigen Abschnitts (223) in Verbindung steht, und/oder die zweite Seitenwand (227) mindestens eine Fluidzufuhrleitung (251) aufweist, die sich radial erstreckt und mit der mindestens einen Kühlmittelverteilerleitung (252) des zweiten rohrförmigen Abschnitts (224) in Verbindung steht.

8. Getriebeanordnung nach dem vorhergehenden Anspruch, bei der die erste Kupplung (30) von einem ersten Aktuator (110) betätigt wird, der eine erste Kammer (112) umfasst, die dazu bestimmt ist, ein Betätigungsfluid aufzunehmen, und einen ersten beweglichen Kolben (111), der dazu geeignet ist, axial in der ersten Kammer (112) zu gleiten, wobei die erste Kammer (112) in dem Gehäuse (22) der elektrischen Maschine (2) ausgebildet ist, und die mindestens eine Fluidzufuhrleitung (251) der ersten Seitenwand (225) mit der ersten Kammer in Verbindung steht; und/oder die zweite Kupplung (50) von einem zweiten Aktuator (120) betätigt wird, der eine zweite Kammer (122) umfasst, die dazu bestimmt ist, ein Betätigungsfluid aufzunehmen, und einen zweiten beweglichen Kolben (121), der dazu geeignet ist, axial in der zweiten Kammer (122) zu gleiten, wobei die zweite Kammer (122) in dem Gehäuse (22) der elektrischen Maschine (2) ausgebildet ist, und die mindestens eine Fluidzufuhrleitung (251) der zweiten Seitenwand (227) mit der zweiten Kammer (122) in Verbindung steht.

9. Getriebeanordnung nach den Ansprüchen 5 und 7, bei der die gemeinsame Eingangswelle (24) hohl ist und der zweite Getriebemechanismus (60) eine Verbindungswelle (26) umfasst, die sich axial innerhalb der gemeinsamen Eingangswelle (24) erstreckt, Wälzelemente, wie z. B. Nadeln, zwischen der gemeinsamen Eingangswelle (24) und der Verbindungswelle (26) angeordnet sind, die gemeinsame Eingangswelle (24) mindestens eine Schmierleitung (241) aufweist, die mit der mindestens einen Zufuhrleitung (251) der ersten Seitenwand (225) und/oder der zweiten Seitenwand (227) in Verbindung steht, wobei die mindestens eine Schmierleitung (241) so mündet, dass sie die Wälzelemente schmiert.

10. Getriebeanordnung nach einem der vorhergehenden Ansprüche, bei der der erste Getriebemechanismus (40) eine erste Untersetzungsvorrichtung umfasst und der zweite Getriebemechanismus (60) eine zweite Untersetzungsvorrichtung umfasst, die über die Verbindungswelle (26) mit der zweiten Kupplung (50) verbunden ist, wobei die erste und die zweite Untersetzungsvorrichtung axial auf derselben Seite der elektrischen Maschine (2) angeordnet sind.

11. Getriebeanordnung nach einem der Ansprüche 7 oder 8, bei der das Gehäuse (22) der elektrischen Maschine (2) ein Gehäuse (28) umfasst und eine der ersten und zweiten Seitenwände (225, 227) auf einem Deckel (229) ausgebildet ist, der an dem Gehäuse (28) angebracht ist.

12. Getriebeanordnung nach Anspruch 7 oder 8 oder 11, bei der der erste rohrförmige Abschnitt (223) und die erste Seitenwand (225) einstückig ausgebildet sind, insbesondere in dem Deckel (229).

## Claims

1. A transmission assembly comprising:
- an electric machine (2) equipped with a rotor (21) adapted to rotate about an axis of rotation (X),
- a casing (22) for the electric machine, enclosing the electric machine (2),
- a first clutch (30) intended to drive a first transmission mechanism (40) in rotation,
wherein the casing (22) of the electric machine (2) comprises a first tubular portion (223) extending along the axis of rotation (X) and around the axis of rotation (X), the first tubular portion (223) of the casing (22) projecting axially outward from the casing on a first side of the electric machine, the first clutch (30) being disposed at least partially around the first tubular portion (223),
**characterized in that** the first clutch (30) comprises a plurality of friction discs (31E, 32s), at least a portion of the friction discs (31E, 32s) being disposed around the first tubular portion (223).

2. The transmission assembly according to the preceding claim, wherein the first clutch (30) is a wet clutch and the first tubular portion (223) comprises at least one distribution duct (252) for cooling fluid, said at least one distribution duct (252) extending axially and opening radially into the interior of the friction discs (31E, 32s) of the first clutch.

3. The transmission assembly according to the preceding claim, wherein said at least one distribution duct (252) opens axially into an axial sector occupied by the friction discs (31E, 32s) of the first clutch (30).

4. The transmission assembly according to any one of the preceding claims, wherein the transmission assembly comprises a second clutch (50) intended to drive a second transmission mechanism (60) in rotation, and the casing (22) of the electric machine (2) comprises a second tubular portion (224) extending along the axis of rotation (X), the second tubular portion (224) projecting axially outward from the casing (22) on a second side of the electric machine (2) axially opposite the first side, the second clutch (50) being disposed at least partially around the second tubular portion (224).

5. The transmission assembly according to the preceding claim, wherein the second clutch (50) comprises a plurality of friction discs (51E, 52s), at least a portion of the friction discs being disposed around the second tubular portion (224); the second clutch (50) being a wet clutch and the second tubular portion comprising at least one cooling fluid distribution duct, said at least one distribution duct (252) extending axially and opening radially into the interior of the friction discs (51E, 52s) of the second clutch (50), and said at least one distribution duct (252) opening axially into an axial sector occupied by the friction discs (51E, 52s) of the second clutch (50).

6. The transmission assembly according to the preceding claim, wherein the rotor (21) is mounted so as to be integral in rotation with a common input shaft (24), common to the first and second clutches (30, 50), a first rolling bearing (11) being radially interposed between the casing (22) of the electric machine and the common input shaft (24), the first rolling bearing (11) being located with respect to the rotor (21) on the side of the first clutch (30), and a second rolling bearing being radially interposed between the casing (22) of the electric machine and the common input shaft (24), the second rolling bearing (12) being located with respect to the rotor (21) on the side of the second clutch (50), the distribution duct (252) of the first tubular portion (223) opening axially opposite the first rolling bearing (11) and/or the distribution duct of the second tubular portion (224) opening axially opposite the second rolling bearing (12).

7. The transmission assembly according to any one of the preceding claims, wherein the casing (22) of the electric machine (2) comprises a first side wall (225) disposed axially between the rotor (21) and the first clutch (30) and the casing (22) of the electric machine (2) comprises a second side wall (227) disposed axially between the rotor (21) and the second clutch (50); and wherein the first side wall (225) comprises at least one fluid supply duct (251) that extends radially and communicates with said at least one cooling fluid distribution duct (252) of the first tubular portion (223) and/or the second side wall (227) comprises at least one fluid supply duct (251) that extends radially and communicates with said at least one cooling fluid distribution duct (252) of the second tubular portion (224).

8. The transmission assembly according to the preceding claim, wherein the first clutch (30) is actuated by a first actuator (110) which comprises a first chamber (112) intended to contain an actuating fluid and a first movable piston (111) adapted to slide axially in the first chamber (112), the first chamber (112) being formed in the casing (22) of the electric machine (2), and said at least one fluid supply duct (251) of the first side wall (225) communicating with the first chamber; and/or the second clutch (50) is actuated by a second actuator (120) which comprises a second chamber (122) intended to contain an actuating fluid and a second movable piston (121) adapted to slide axially in the second chamber (122), the second chamber (122) being formed in the casing (22) of the electric machine (2), and said at least one fluid supply duct (251) of the second side wall (227) communicating with the second chamber (122).

9. The transmission assembly according to claims 5 and 7, wherein the common input shaft (24) is hollow and the second transmission mechanism (60) comprises a connecting shaft (26) extending axially inside the common input shaft (24), rolling elements, such as needles, being interposed between the common input shaft (24) and the connecting shaft (26), the common input shaft (24) comprising at least one lubrication duct (241) communicating with said at least one supply duct (251) of the first side wall (225) and/or of the second side wall (227), said at least one lubrication duct (241) opening out so as to lubricate the rolling elements.

10. The transmission assembly according to any one of the preceding claims, wherein the first transmission mechanism (40) comprises a first reduction device and the second transmission mechanism (60) comprises a second reduction device connected to the second clutch (50) by the connecting shaft (26), the first and second reduction devices being located axially on the same side of the electric machine (2).

11. The transmission assembly according to claim 7 or 8, wherein the casing (22) of the electric machine (2) comprises a housing (28) and one of the first and second side walls (225, 227) is formed on a cover (229) attached to the housing (28).

12. The transmission assembly according to claim 7 or 8 or 11, wherein the first tubular portion (223) and the first side wall (225) are formed in one piece, in particular in the cover (229).
